# EUROPEAN PATENT APPLICATION

(11) **EP 3 406 331 A1**
(43) Date of publication of application: **28.11.2018**
(21) Application number: 17172683.9
(22) Date of filing: 24.05.2017
(51) Int. Cl.: B01F 15/02, B01F 15/00, B01F 13/00, B01F 5/06, A61C 9/00, A61C 5/64, B65D 81/32

(54) **A MIXER FOR DISPENSING A MULTI-COMPONENT MATERIAL**

(71) Applicant: 3M Innovative Properties Company, Saint Paul, MN 55133-3427 (US)
(72) Inventor: Boehm, Andreas, 86934 Reichling (DE); Behrens, Anke, 80997 München (DE); Peuker, Marc, 86938 Schondorf (DE); Zech, Joachim, 86916 Kaufering (DE); Hecht, Reinhold, 86916 Kaufering (DE)
(74) Representative: Hohmann, Arno

(57) **Abstract**

The invention relates to a mixer 11 for dispensing a multi-component material comprising:
- a first inlet 14a, 14b for at least a first component A, B of the multi-component material;
- a mixing tube 18;
- a compartment 21 a, 21 b for at least a second component C of the multi-component material;
- a duct 25a, 25b that establishes a fluid communication between the inlet and the compartment, wherein
- the duct forms a first exit 20a, 20b into the mixing tube and
- the compartment forms a second exit 22a, 22b into the mixing tube.

## Description

### Field of the Invention

The invention relates to a mixer for dispensing a material, and in particular to a mixer for dispensing a multi-component material, the mixer comprising a mixing tube and several inlets and/or exits. The invention also relates to a system for dispensing a material, in particular to a system for dispensing a multi-component material, the system comprising a mixer according to the invention and a cartridge.

### Background Art

Dental substances are often provided in packages holding a sufficient amount of substance or material for multiple applications. A dentist typically uses portions of such substances for application in a patient's mouth. A dentist may for example place a portion of a dental substance on a pad or into a well and use a dental instrument for applying it within a patient's mouth. Dental impression materials may for example be filled into a dental impression tray which is then placed in a patient's teeth. However in many situations dental substances may also be placed into a patient's mouth directly from a package in which the substance is contained. Today there are a variety of packages that allow for direct application of substances into a patient's mouth.

Dental substances further are often prepared from two or more components that are mixed together just before use. Often the individual components are obtained as portions from larger packages, for example from tube bags or cartridges. There are packages on the market that allow manual or automatic dispensing of two or more components at desired amounts and at an appropriate ratio for mixing. Furthermore there are packages that allow dispensing portions of readily mixed substances from individually stored components.

US 3,042,263 discloses a collapsible tube containing tooth-paste, and impart to the paste upon ejection a striped character, the stripes being comprised of a suitable medicated ingredient, or if desired, purely decorative material.

For example EP 1 656 215 B1 discloses a unit-dose syringe for a multi-component material comprising a cartridge with a main compartment for a first component and one or more side compartments for additional components. WO 2010/123 800 A1 is another example for a dispensing device for a dental multi-component material.

Mixing of multi-component materials is not limited to dental applications. Everywhere, where two or more components get mixed at the time of application or use are potential fields for use of the mixer according to the invention.

Although a variety of solutions for dispensing multi-component material exists there is still a desire for a dispensing system that that allows easy handling, and which is relatively inexpensive. Especially in the dental area a variety of solutions for dispensing dental substances into a patient's mouth there is still a desire for a dispensing system that allows easy handling and which is relatively inexpensive.

### Summary of the Invention

The invention relates to a mixer for dispensing a multi-component material comprising:
- a first inlet for at least a first component of the multi-component material;
- a mixing tube;
- a compartment for at least a second component of the multi-component material;
- a duct that establishes a fluid communication between the inlet and the compartment, wherein
- the duct forms a first exit into the mixing tube and
- the compartment forms a second exit into the mixing tube.

The mixer according to the invention provides a first inlet for receiving at least one first component of a multi-component material to be mixed. It also provides a mixing tube to mix the at least one component. The mixer according to the invention further comprises a compartment for at least a second (or third) component of the multi-component material to also be mixed in the mixing tube. Finally the mixer according to the invention comprises a duct that establishes a fluid communication between the first inlet and the compartment, wherein the duct forms a first exit into the mixing tube and the compartment forms a second exit into the mixing tube.

With a mixer according to the invention it is possible to mix at least a first component, entering the first inlet and further being urged through the duct. From there the at least one first component may go directly into the mixing tube. Further the first component may be split into a first flow going directly into the mixing tube and a second flow going into the compartment of the mixer. The second component that is stored in the compartment gets urged towards the second exit into the mixing tube, due to the first component entering the compartment. Accordingly the first component flowing into the compartment displaces (and gradually replaces) the second component from the compartment. It is also possible to have two components entering the mixer through two first inlets and mix them with one further component being stored in the compartment or with two further components being stored in two compartments. A mixer with more than two first inlets for more than two components as well as a mixer with more than two compartments or more than two additional components is possible as well.

The compartment of the mixer may be any kind of hollow space e.g. inside the mixer that provides room for receiving and storing a component of a multi-component material. The compartment may be formed by parts of the mixer.

The mixer according to the invention may comprise a cartridge valve for opening and closing the first inlet. The cartridge valve may be any kind of known valve.

The cartridge valve may for example comprise a cartridge valve element or cartridge valve member, wherein the cartridge valve member may be movable relative to the mixer and can be moved between an open position and a closed position. It may also comprise a cartridge valve body which may be part of the housing of the mixer. It may be integrally formed with the mixer. The cartridge valve body may comprise openings and may receive the cartridge valve member. The cartridge valve member may comprise a sealing surface for sealing with the cartridge valve body and at least one conduit. The cartridge valve member may comprise as many conduits as the mixer comprise inlets. The cartridge valve body and the cartridge valve member are preferably movable relative to one another between an open position, in which the inlet is in fluid communication with the outside of the mixer so that the opening is/are open, and a closed position, in which the sealing surface cover(s) or seals(s) the opening(s) so that the openings(s) is/are closed. The cartridge valve member may have a generally cylindrical outer surface, and the cartridge valve body may have a corresponding generally cylindrical inner surface. The outer surface of the cartridge valve member and the inner surface of the cartridge valve body are preferably mated with one another, such that the cartridge valve body and the cartridge valve member are rotatable relative to one another around a rotation axis.

The first inlet may be any opening that enables a flow of fluid or material from outside the mixer according to the invention to the inside of the mixer. The first inlet may provide a valve element that may be brought from an open position into a closed position and may allow to stop the flow of fluid or material through the first inlet into the mixer. The valve may for example comprise a valve element that is movably mounted within the mixer. The valve element may be activated from the outside. If several inlets exist, each inlet may provide a separate valve element. The valve element may be a linear plate and may be actuated by moving into one direction. It is also possible to provide a valve element, e.g. in the form of a disk, that may be activated through a rotational movement.

The mixing tube may be any kind of elongated section of the mixer that allows a flow of fluid going through it and being mixed therein. The mixing tube may comprise additional elements that support the mixing process. The mixing tube of the mixer according to the invention may be positioned at the opposite side of the first inlet of the mixer.

The duct of the mixer according to the invention may also be any kind of hollow space e.g. inside of the mixer that enables a fluid communication between the first inlet of the mixer and the compartment of the mixer. The duct can have any shape and any dimension as long as the components of the multi-component material can be moved through it with reasonable efforts.

Finally the mixer provides two exits towards the mixing tube. A first exit is formed in the duct. A second exit is formed in the compartment. Preferably the compartment is formed between the first and second exit. Thus part of the first component flowing into the compartment causes the component stored in the compartment to displace through the second exit. It is possible that the first exit is placed at the beginning of the material stream in the mixing tube and that the second exit is placed further down the material stream in the mixing tube. This means that in the first passage of the mixing tube only material coming from the inlet through the duct into the mixing tube will be mixed and that in a second passage of the mixing tube, which is further down the material stream, a further component out of the compartment of the mixer gets mixed into the multi-component material as well.

With the mixer according to the invention it is possible to mix a multi-component material and to add a defined amount of an additional component. The additional component may for example be used to alter the characteristic of an original or standard composition (out of the cartridge). The additional component is fed into the components flow of the original composition for example through the pressure that is applied to dispense the components of the cartridge.

One possible application of a mixer according to the invention may for example be in the dental area, where dental situation cases are highly differentiated. To have the perfect dental material to the actual needs of the clinical situation a high number of different dental materials may be required. With the mixer according to the invention it is possible to adapt a standard material to different clinical situations, thus to alter a standard material depending on the actual situation. Furthermore the invention opens a way for formulations that would not be stable in a two component approach, with the possibility to have a third or even forth component in the mixer.

The mixer according to the invention may be attached to a cartridge containing at least one component of a multi-component material as will be explained in more detail below. According to the invention, the mixer may comprise means for attaching the cartridge. Those means may be any kind of known means that enable a reliable connection between the mixer and the cartridge that enables a reliable flow of material contained in the cartridge through the mixer. The connection may be re-openable to be able to detach the cartridge from the mixer, e.g. after one application of the multi-component material.

According to one embodiment of the invention, the mixer may comprise a housing and a static mixer. Such an embodiment provides the advantage that only two parts need to be produced and assembled. Those two parts provide all the functions and or features of claim 1. It is of course also possible that the mixer comprises more than those two parts. In addition, each of the two parts may each consist of several parts as well.

The mixing tube may provide a hollow space for receiving a mixing helix, which may be part of the static mixer. According to another embodiment the housing of the mixer may comprises the mixing tube for example extending into the opposite direction as the means for attaching the cartridge and providing the hollow space for receiving a static mixer. The static mixer may be used to mix the components of the multi-component material before it gets applied or used.

The static mixer may comprise a mixing helix. The static mixer may be a collapsible static mixer. The number of paddles of the helix is selected such that it is enough to mix all the components that are urged through the mixing tip. The static mixer is dimensioned such that it is able to reliable mix through (all) the component(s) entering the inlet plus the component(s) of the additional compartment(s) of the mixer.

The housing of the mixer may be made out of one piece or it may comprise several pieces that may be assembled to one housing. It may be made out of plastic, glass, metal, a combination of the before mentioned materials or any other suitable material. As also already mentioned above, the static mixer may be made out of one piece of it may comprise several pieces that may be assembled to one housing. It may be made out of plastic, glass metal a combination of the before mentioned materials or any other suitable material.

The compartment preferably comprises an entrance. The entrance may be formed by the transition between the duct and the compartment. The compartment of the mixer may provide a compartment valve for opening and closing the entrance of the compartment. The compartment valve may comprise a movable compartment valve element. The compartment valve may be positioned at or adjacent the entrance of the compartment, which is directed towards the duct.

The compartment of the mixer may also provide a compartment valve for opening and closing the second exit of the mixer, which is the exit from the compartment into the mixing tube. This compartment valve may also comprise a movable compartment valve element. The compartment valve may be positioned at or adjacent the second exit of the compartment.

If several mixer compartments exist, each compartment may comprise its own compartment valve element or elements. The compartment valve element or elements may for example be activated manually from the outside of the mixer so that it or they can be opened and closed when needed. The compartment valve element or elements can also be used to dimension the entrance and the second exit of the compartment in order to influence the amount of component leaving the compartment and entering the mixing tube. It is possible that the compartment valve element is a slide that may be actuated by moving it into one direction. It is also possible that the compartment valve element is for example a disk with holes that may be actuated by a rotating movement.

The first and the second exit as well as the first inlet of the mixer may be designed such, that if the first component is urged through the inlet and the duct that the further component is urged by the at least one component out of the compartment through the second exit towards the mixing tube. Also the dimensions of the duct may be selected such that the above described functionality of the mixer with the further compartment is provided.

According to another embodiment, the sizes of the first and the second exit may be selected such that the needed amount of the further component stored in the compartment of the mixer gets dispensed towards the mixing tube. Depending on the pressure and the amount of component being urged through the first inlet and the duct of the mixer an adequate amount of further component gets urged out of the second exit towards the mixing tube. The concentration of the further component and the size of the two exits need to be adapted such, that through urging component into the compartment of the mixer the needed amount of the further component gets urged into the mixing. Preferably the second exit has a smaller cross-section than the first exit. Accordingly the mixing ratio between the first and the second component is different form 1:1.

According to another embodiment the compartment may be arranged inside the housing of the mixer. Such a configuration provides the advantage of being a compact assembly that is robust and can be handled easily. It is also possible to arrange the compartment outside of the housing, which may have the advantage of better accessibility of the compartment.

If the compartment of the mixer is arranged inside of the housing of the mixer, it may comprise an outer wall from the housing and an inner wall from the static mixer. In other words, the compartment is built by a hollow space which is surrounded by parts of the housing of the mixer and by parts the static mixer. Such an arrangement is very compact, space saving and provides a robust solution for a multi-component dispensing tool.

The multi-component material may be a dental material. As already pointed out above, dental situation cases are highly differentiated nowadays. In order to provide a solution for all actual needs of clinical situations without having to hold many different products in the dental office, it is beneficial if the performance of dental materials can be adapted for every application. A mixer according to the invention for a dispensing a multi-component dental material can help to achieve this desire.

The device according to the invention may be used for multi-component material that is a dental material. The dental material may be selected from among a dental filling material, a dental impression material, a dental sealant, and a dental adhesive, for example.

The invention also provides a system for dispensing a multi-component material comprising:
- a mixer with the features described above and
- a cartridge comprising at least one compartment for at least one component of the multi-component material.

The cartridge for the system for dispensing a multi-component material according to the invention carries at least one component of the multi-component material. It is designed such that it can be attached to the mixer such that the component of the cartridge may be urged through the inlet of the mixer into the mixer. For this purpose the mixer may provide means for attaching the cartridge. Those means may be any kind of known means that enable a reliable connection between the mixer and the cartridge that enables a reliable flow of material contained in the cartridge through the mixer. The connection may be re-openable to be able to detach the cartridge from the mixer, e.g. after one application of the multi-component material.

The cartridge may be any cartridge carrying at least one component in at least one compartment. It may provide the needed geometry to be attached to the means for attaching a cartridge to the mixer according to the invention.

According to a further embodiment, the cartridge for a device for dispensing a material with a mixer according to the invention may comprise two compartments for two components of the multi-component material. The cartridge may also comprise more than two compartments. Each of the compartments may extend along the longitudinal axis with a generally uniform cross-section. Further the cross-sectional areas may be dimensioned to provide a ratio of 1:1, 1:2, 1:4, 1.5 or 1:10, for example. Each of the compartments may open into an outlet. The compartments of the cartridge may be arranged concentrically.

According to another embodiment, the cartridge may comprise a plunger that comprises at least one piston receivable in the at least one compartment of the cartridge for extruding the material from the compartment of the cartridge through the mixing tube of the mixer.

The at least one piston may be receivable at an end of the compartment of the cartridge opposite of its outlet or opening. In such an embodiment of the invention the plunger may have a common pressure plate for advancing the piston. The plunger, the piston and the pressure plate may form a single piece, for example an integrally formed piece. If the cartridge provides for example two compartments, the plunger may also provide two pistons, one for each compartment. The common pressure plate may be used for advancing both pistons simultaneously. In such a case, the device may be used to dispense two components out of the cartridge, which when mixed together chemically react, for example harden. With a mixer according to the invention, it is possible to add to those two components a third component, to alter the original composition, for example to alter the hardness of the composition. With a mixer according to the invention mutually reacting components may be kept separate in the device until they are dispensed for use from the device. Therefore the storage time of the stored components may be enhanced relative to a mixture of the same components. In addition, with the possibility provided by the mixer according to the invention to add a further component to alter the properties of the final composition it is possible to limit the number of different components that needs to be provided, for example number of different dental multi-component materials for different clinical situations.

The system for dispensing a material may also comprise at least two fingerplates which are arranged along a longitudinal axis of the system and spaced apart from one another. The two fingerplates may allow for more convenient handling of the device.

According to yet another embodiment, the mixer for the system for dispensing a multi-component material may be prefilled with at least one component for the multi-component material in at least one compartment. Such a configuration may provide the advantage to provide a ready to use mixer that only needs to be attached to a cartridge containing a standard material. The further component contained in the further compartment of the mixer may be added to alter the standard material. No additional mixing, weighing or other steps are necessary. It is possible that several prefilled mixers are provided, each mixer containing a component to be added for altering the standard component in a different way.

It is also possible to pouch a prefilled mixer, e.g. pouch under vacuum or inert gas, in order to be able to store the mixer with the prefilled component.

### Brief Description of the Figures

- Fig. 1: is a perspective view of a mixer according to one embodiment of the invention together with a system according to the invention;
- Fig. 2: is a partial cross-sectional perspective view of the front portion of the system of fig. 1 showing the central portion of the mixer;
- Fig. 3: is a partial cross-sectional view of the mixer of the system of fig. 1;
- Fig 4a and 4b: are partial cross-sectional views of the mixer of the system of fig. 1 with a valve in an open position and in a close position;
- Fig. 5a to 5d: are partial cross-sectional schematical views of the system according to fig. 1 with different filling conditions;
- Fig. 6: is a perspective view of the mixer of fig. 1 showing a cavity for receiving a cartridge; and
- Fig. 7a to 7d: are partial schematical cross-sectional views of the mixer of fig. 1 with different valves for the compartment of the mixer with the valves in open and in closed positions.

### Detailed Description of the Invention

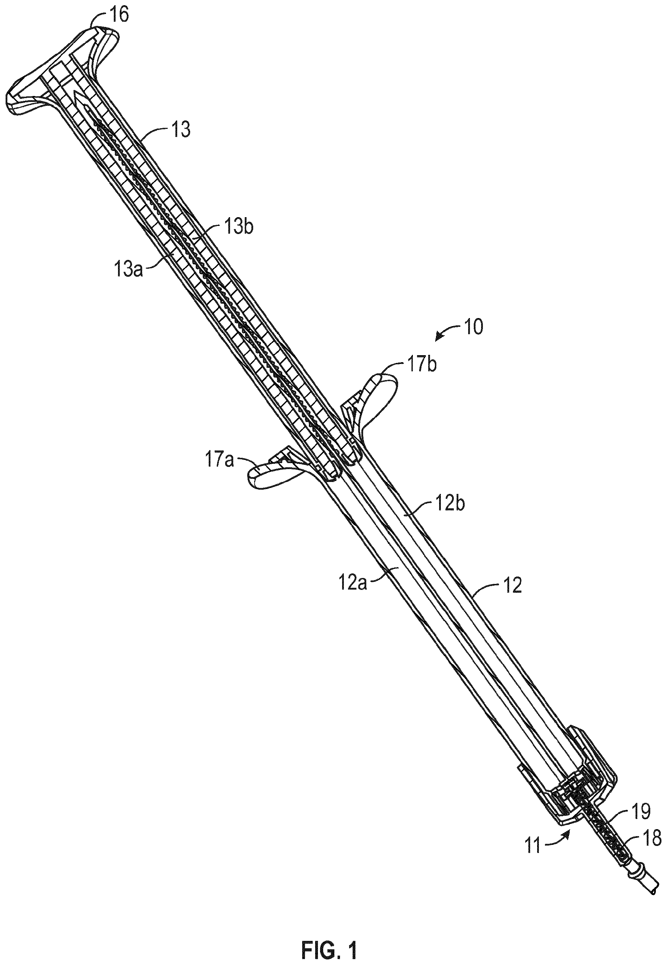

Fig. 1 shows a system 10 for dispensing a multi-component material. The multi-component material may for example be a dental multi-component material. The system 10 comprises a mixer 11 with a cannula or mixing tube 18 received at a front end of the system 10. The mixing tube 18 provides a static mixer 19. The mixer 11 is releasably mounted to the system 10 and allows for removing and/or replacing the mixer 11, for example by a user. The system 10 further comprises a container or cartridge 12 which has two chambers or compartments 12a and 12b for containing two different components A and B of for example a dental multi-component material (not shown). The cartridge 12 is attached to the mixer 11. An activator or plunger 13 with two pistons 13a and 13b is placed in the cartridge 12 and the compartments 12a and 12b of the cartridge 12. The pistons 13a and 13b are movable within the compartments 12a and 12b for extruding the material from the compartments 12a and 12b towards an outlet of the cartridge 12. The plunger 13 comprises a pressure plate 16 for applying a force onto the plunger 13 with the pistons 13a and 13b. The system 10 for dispensing a multi-component material according to the invention further comprises two fingerplates 17a and 17b which are arranged along the longitudinal axis of the system and spaced apart from each other.

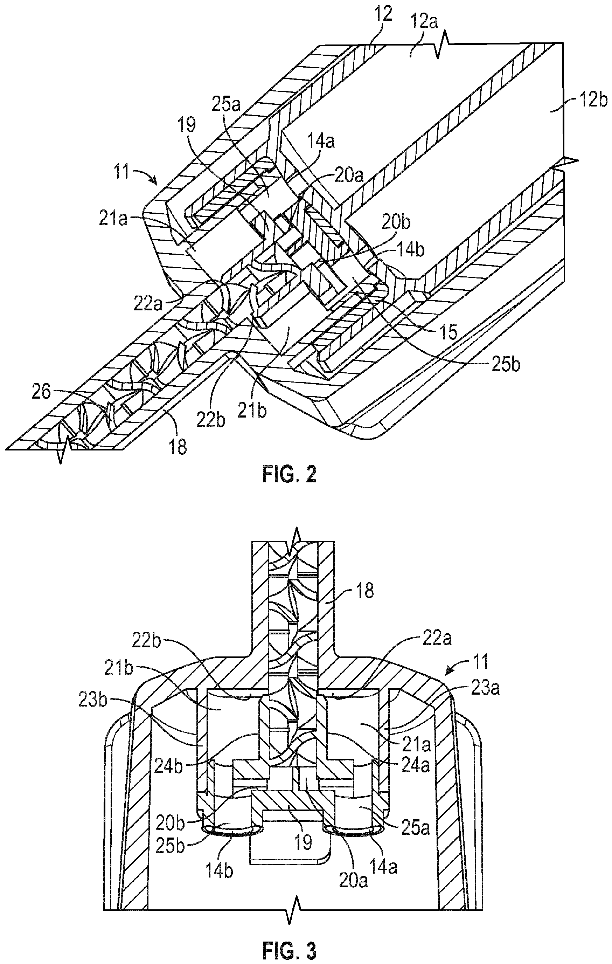

A cartridge valve member 15 (as will be described in more detail below and as shown in fig. 2) may close the outlet of the cartridge 12 of the system 10 in a storage mode. The cartridge valve member 15 can be brought from the storage mode into an operative mode. In the operative mode the cartridge valve member 15 is open to the outlet and thereby establishes a fluid communication between the outlet of the cartridge 12 and the mixer 11. Thus in an operative mode the system 10 can be used to extrude material from the compartments 12a and 12b of the cartridge 12 through the mixer 11.

Although the example of fig. 1 shows a system 10 for dispensing a multi-component material having two compartments 12a and 12b with two pistons 13a and 13b, the skilled person will appreciate that a system having only one compartment with one piston, or a system having multiple compartments with multiple pistons may likewise be used with the present invention.

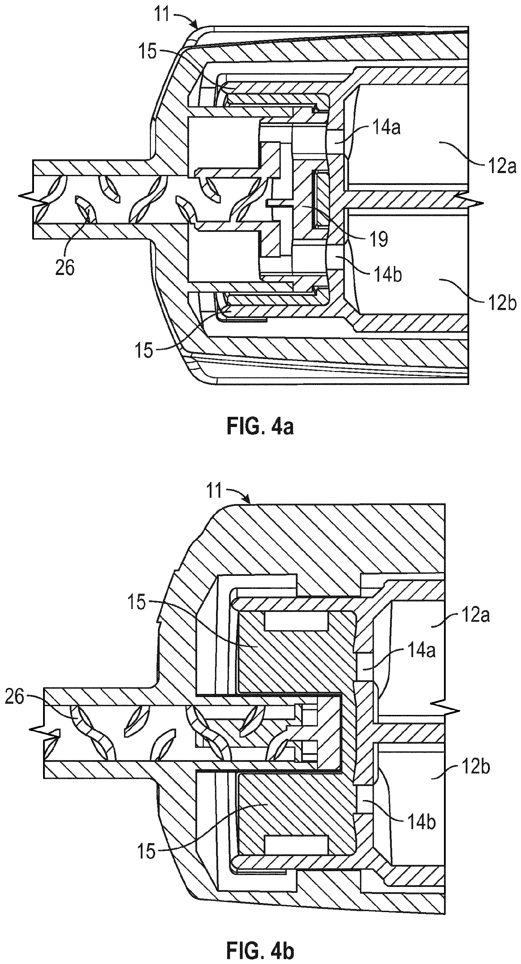

Fig. 2 is a partial cross-sectional perspective view of the front portion of the system 10 of fig. 1 showing the central portion of the mixer. The system 10 comprises a cartridge 12 with two compartments 12a and 12b. Each of the compartments 12a and 12b provide an opening corresponding to inlets 14a and 14b of the mixer 11. The openings may be closed by the cartridge valve with a cartridge valve member 15. The functionality of the cartridge valve with the cartridge valve member 15 will be explained in more detail below with reference to fig. 4a and 4b.

As already pointed out above the mixer 11 provides a static mixer 19, which is received in the mixing tube 18 of the mixer 11. The static mixer 19 provides a mixing helix 26 with a number of paddles. The number of paddles of the mixing helix 26 is selected such that it is enough to mix all the components through that are urged through the mixing tip. At its rear end, which is directed towards the cartridge 12, the static mixer 19 provides two ducts 25a and 25b. In the embodiment shown in fig. 2 the ducts 25a and 25b are built by the static mixer 19 and essentially provide a hollow space enabling a fluid communication between the inlets 14a and 14b and the first exits 20a and 20b. It is also possible that the ducts 25a and 25b are formed by other parts of the mixer 11.

The mixer 11 also provides two compartments 21 a and 21 b for receiving a further component of the multi-component material. The compartments 21 a and 21 b are arranged underneath the ducts 25a and 25b of the mixer 11 on both sides of the mixing helix 26. In fig. 2 the compartments 21 a and 21 b are open towards the ducts 25a and 25b of the mixer 11 as well as towards the inlets 14a and 14b and may be separated from the compartments 12a and 12b with help of the cartridge valve member 15 mentioned above. The compartments 21 a and 21 b each provide an exit 22a and 22b which is directed towards the mixing helix 26 in the mixing tube 18 of the static mixer 19, which mixes a material flow when the device 10 is in use. The exits 22a and 22b are arranged downstream of the flow of the material coming out of the cartridge 12.

The mixer 11 for dispensing a multi-component material according to the invention thus comprises first exits 20a and 20b which are formed by the ducts 25a and 25b and which end into the mixing tube 18. The mixer 11 for dispensing a multi-component material according to the invention further comprises second exits 22a, 22b which are formed by the compartments 21 a and 21 b and which also end into the mixing tube 18.

In an operative mode of the system 10 the ducts 25a and 25b align with the inlets 14a and 14b as well as with the openings of the compartments 12a and 12b carrying the two components, for example A and B, for the multi-component material. In the operative mode the two components A and B of the multi-component material can thus be urged through the pistons 13a and 13b of the plunger 13 through the inlets 14a and 14b of the mixer 11 and through the ducts 25a and 25b of the mixer 11 and through the first exits 20a and 20b towards the mixing helix 26 of the static mixer 19.

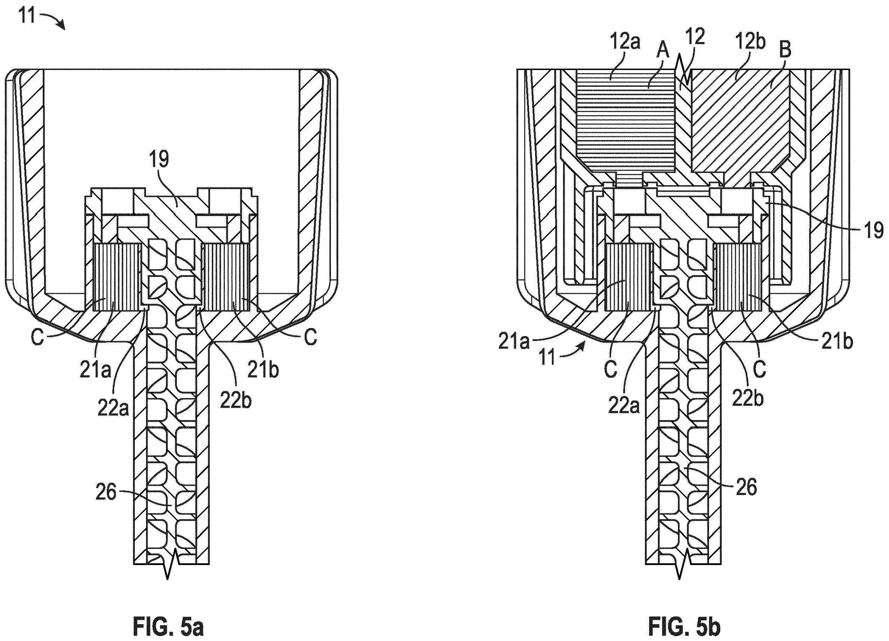

The components A and B from the two compartments 12a and 12b of the cartridge 12 may also take another way. The other way is the way through the compartments 21 a and 21 b of the mixer 11. By taking this second way the material A and/or B urges onto a third component, e.g. material C, in the compartments 21 a and 21 b. Further information of the different flows of material can be found below with reference to fig. 5a to 5d.

Fig. 3 is a partial cross-sectional view of only the mixer 11 of the system of fig. 1. The mixer 11 comprises a housing and a static mixer 19. Housing and static mixer 19 build the following functional parts of the mixer 11: two inlets 14a and 14b for receiving two components, e.g. A and B, of a multi-component material for example from a cartridge (not shown in fig. 3); a mixing tube 18 for receiving a mixing helix 26 of the static mixer 19; two compartments 21 a and 21 b for receiving an additional component, e.g. C, of the multi-component material; two ducts 25a and 25b enabling or establishing a fluid communication between the inlets 14a, 14b and the compartments 21 a, 21b; and two kind of exits - first exits 20a and 20b formed by the ducts 25a and 25b into the mixing tube 18 - and second exits 22a and 22b formed by the compartments into the tube 18. The compartments 21a and 21 b are formed by outer walls 23a and 23b of the housing 11 of the mixer and inner walls 24a and 24b from the static mixer 19.

With reference to fig. 4a and 4b the functionality of a cartridge valve with a cartridge valve member 15 for the inlets 14a and 14b will be described. Fig. 4a and 4b are partial cross-sectional views of a mixer 11 of the system of fig. 1 with a cartridge valve in an open position and in a close position. The mixer 11 of fig. 4a and 4b is attached to a cartridge 12 with two compartments 12a and 12b. The cartridge 12 can is rotatable connected with the mixer 11. By rotating the cartridge 12 within the mixer 11 the device can be brought from a storage mode in an operative mode. The cartridge valve comprise a cartridge valve member 15. The cartridge valve member 15 is arranged between the housing of the mixer 11 and the cartridge 12. Depending on the position of the cartridge 12 relative to the housing of the mixer 11 with the cartridge valve member 15, the system 10 can be brought either in the storage mode or the operative mode.

Fig. 4a shows the system 10 in an operative mode. In the operative mode the cartridge valve member 15 is open towards the inlets14a and 14b of the mixer 11 and thereby establishes a fluid communication between the compartments 12a of the cartridge 12 and the mixer 11. Thus in an operative mode the system 10 can be used to extrude material from the compartments 12a and 12b through the mixer 11.

Fig. 4b shows the system 10 in a storage mode, in which the cartridge valve member 15 closes the inlets 14a and 14b of the mixer 11 thereby prohibiting a fluid communication between the compartments 12a and 12b of the cartridge 12 and the mixer 11. As pointed out above, the cartridge valve member 15 can be activated by rotating the cartridge 12 relative mixer 11. Other valve members are possible as well, such as for example valve members that may be activated from the outside either by a linear movement or by a rotational movement.

Referring now to fig. 5a to 5d the functionality of the mixer according to the invention will be described. Fig. 5a is a partial cross-sectional schematical view of the mixer 11 for a system for dispensing a multi-component material according to the invention. The mixer 11 comprises a static mixer 19 with a mixing helix 26 and is prefilled with a component C. Component C is filled in the further compartments 21 a and 21 b of the mixer 11.

Fig. 5b is a cross-sectional schematical view of the mixer 11 of fig. 5a with a cartridge 12 attached to it. The device is shown in an operative mode, enabling a fluid communication between the cartridge 12 and the mixer 11. The cartridge 12 comprises two compartments 12a and 12b, each compartment 12a and 12b being filled with a different component A and B, wherein component A is provided in compartment 12a and component B is provided in compartment 12b. In fig. 5b the components A and B have not entered the mixer 11.

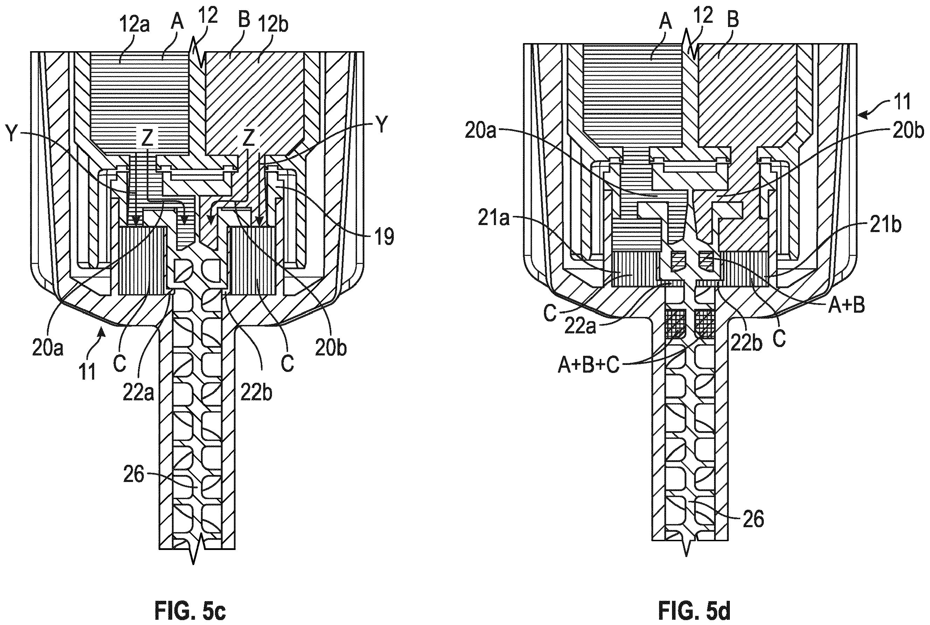

Fig. 5c is a cross-sectional schematical view of the mixer 11 and the cartridge 12 of fig. 5b with the components A and B starting to enter the mixer 11 through the inlets 14a and 14b and the ducts 25a and 25b. As indicated with the arrows Z and Y the components A and B take two ways through the mixer 11. Arrow Z indicates the way of a component A or B through the ducts 25a and 25b and the first exits 20a and 20b towards the mixing tube 18. The second way is indicated with the arrow Y and goes after the ducts 25a and 25b through the further compartments 21 a and 21 b of the mixer 11, where the prefilled component C is present. By urging component A and component B onto component C, component C is pressed out of the compartments 21 a and 21 b through the second exit 22a and 22b, which are directed towards the mixing tube 18 of the mixer 11 (see fig. 5d). As also can be seen in fig. 5d, the upper most part of the mixing helix 26 is used to mix components A and B together. Further down, where component C is entering the flow of material, all three components A, B and C are mixed together with the help of the mixing helix 26.

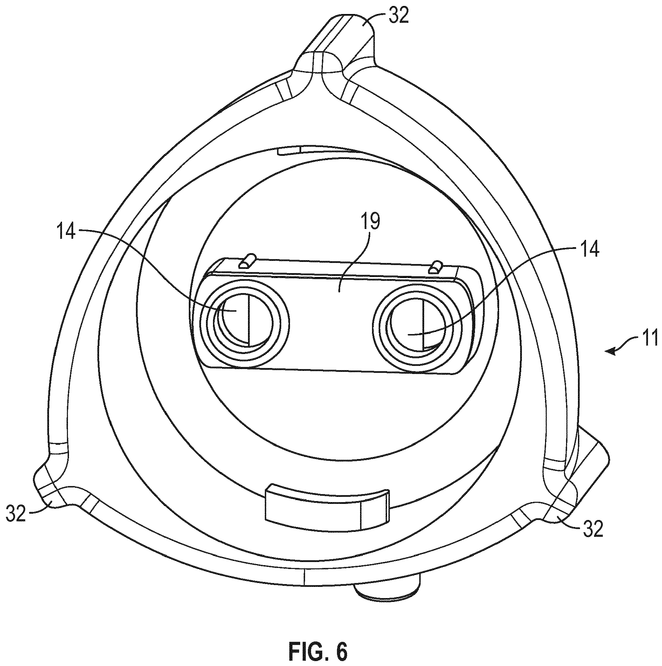

Fig. 6 is a perspective view of the mixer 11 of fig. 1 showing a cavity for receiving a cartridge. The housing of the mixer 11 has a triangular shape with three extensions 32 extending on the outside of the housing of the mixer 11. The extensions 32 are helpful means for attaching the mixer 11 on a cartridge by rotating the mixer 11 relative to the cartridge. The mixer 11 provides a cavity 33 for receiving a cartridge. At the ground of the cavity of the mixer 11 the upper part of the static mixer 19 with the two inlets 14a and 14b can be seen.

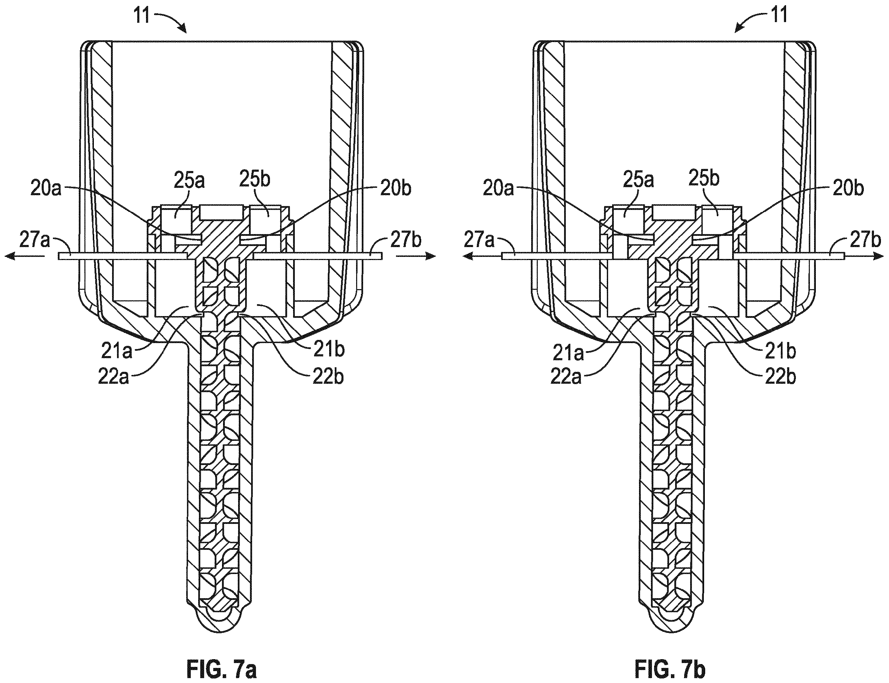

Turning now to fig. 7a to 7d, which are partial schematical cross-sectional views of the mixer 11 of fig. 1 with different valves for the compartments 21 a and 21 b of the mixer 11 with the valves in open and in closed positions. Fig. 7a shows the mixer 11 with the compartments 21 a and 21 b for receiving an additional component for a multi-component material and ducts 25a and 25b. At the entrance of the compartments 21 a and 21 b, between the ducts 25a and 25b and the compartments 21 a and 21 b, compartment valve members 27a and 27b are positioned. The compartment valve members 27a and 27b are shown in a closed position, where no fluid communication between the ducts 25a and 25b and the compartments 21 a and 21 b is possible. The compartment valve members 27a and 27b can be activated from the outside of the mixer by lateral movement of the compartment valve members 27a and 27b. The compartment valve members can also be a disk like element with through holes which can be activated by a rotational movement. Fig. 7b shows the same embodiment as fig. 7a with the compartment valve members 27a and 27b in an open position, where fluid communication between the ducts 25a and 25b and the compartments 21 a and 21 b is possible.

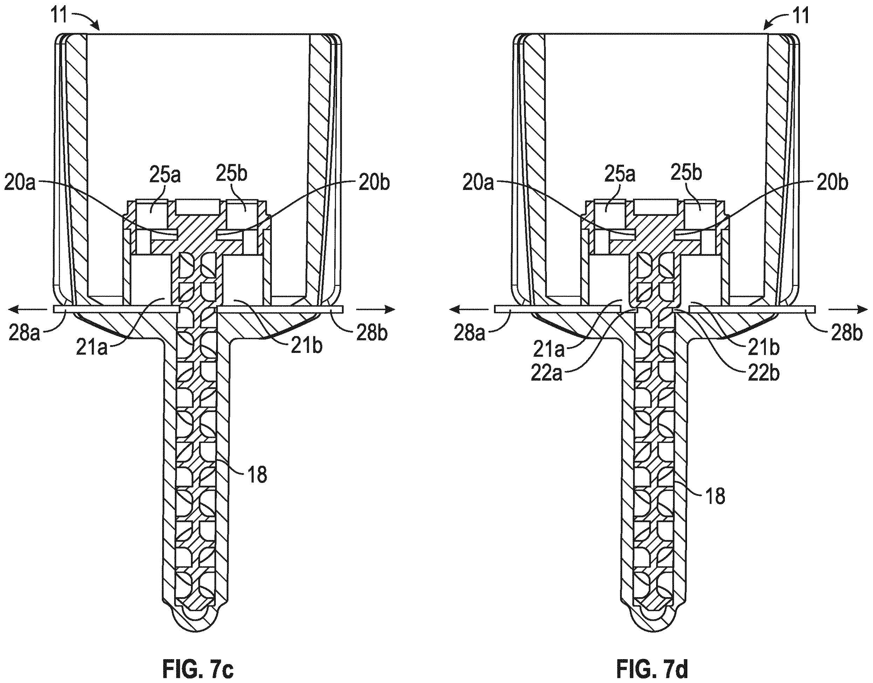

Fig. 7c shows the mixer 11 with the compartments 21 a and 21 b for receiving an additional component for a multi-component material. At the exits 22a and 22b (second exits of the mixer 11) of the compartments 21 a and 21 b, between the compartments 21 a and 21 b and the mixing tube, other compartment valve members 28a and 28b are positioned. The valve members 28a and 28b are shown in a closed position, where no fluid communication between the compartments 21 a and 21 b and the mixing tube 18 is possible. The compartment valve members 28a and 28b can be activated from the outside of the mixer 11 by lateral movement of the compartment valve members 28a and 28b. The compartment valve members and can also be a disk like element with through holes which can be activated by a rotational movement. Fig. 7d shows the same embodiment as fig. 7c with the compartment valve members 28a and 28b in an open position, where a fluid communication between the compartments 21 a and 21 b and the mixing tube 18 is possible.

## Claims

1. A mixer (11) for dispensing a multi-component material comprising:
- a first inlet (14a, 14b) for at least a first component (A, B) of the multi-component material;
- a mixing tube (18);
- a compartment (21 a, 21 b) for at least a second component (C) of the multi-component material;
- a duct (25a, 25b) that establishes a fluid communication between the inlet and the compartment, wherein
- the duct forms a first exit (20a, 20b) into the mixing tube and
- the compartment forms a second exit (22a, 22b) into the mixing tube.

2. The mixer of claim 1 comprising a housing and a static mixer (19).

3. The mixer of claim 1 or 2, wherein the mixing tube (18) provides a hollow space for receiving a static mixer (19).

4. The mixer of any of the preceding claims, wherein the static mixer (19) comprises a mixing helix (26).

5. The mixer of any of the preceding claims, wherein the mixer (11) comprises a compartment valve member (27a, 27b) for opening and closing an entrance of the compartment (21 a, 21 b).

6. The mixer of any of the preceding claims, wherein the mixer (11) comprises a further compartment valve member (28a, 28b) for opening and closing the second exit (22a, 22b) of the compartment (21 a, 21 b).

7. The mixer of any of the preceding claims, wherein the first (22a, 22b) and the second (20a, 20b) exit as well as the inlet (14a, 14b) of the mixer (11) are designed such, that if the first component (A, B) is urged through the inlet (14a, 14b) and the duct (25a, 25b) that the further component (C) is urged by the at least one component (A, B) out of the compartment (21 a, 21 b) through the second exit (22a, 22b) towards the mixing tube (18).

8. The mixer of claim 6 wherein, the sizes of the first (22a, 22b) and the second (20a, 20b) exit are selected such that the needed amount of the further component (C) stored in the compartment (21 a, 21 b) of the mixer (11) gets dispensed towards the mixing tube (18).

9. The mixer of any of the preceding claims, wherein the compartment (21 a, 21 b) of the mixer (11) is arranged inside of the housing of the mixer 11.

10. The mixer of any of the preceding claims, wherein the compartment (21 a, 21 b) of the mixer (11) comprises an outer wall (23a, 23b) from the housing of the mixer (11) and an inner wall (24a, 24b) from the static mixer (19).

11. The mixer of any of the preceding claims, wherein the multi-component material is a dental material.

12. System for dispensing a multi-component material comprising:
- a mixer (11) according to any of the preceding claims;
- a cartridge (12) comprising at least one compartment (12a, 12b) for at least one components (A, B) of the multi-component material.

13. The system of claim 12, wherein the cartridge comprises two compartments (12a, 12b), wherein the compartments are arranged concentrically.

14. The system of claim 12 or 13, wherein the cartridge comprises a plunger (13) that comprises at least one piston (13a, 13b) receivable in the at least one compartment (12a, 12b) of the cartridge (12) for extruding the material from the compartment of the cartridge through the mixing tip (18) of the device (10).

15. The system of any of the claims 12 to 14, wherein the mixer (11) is prefilled with at least one component (C) for the multi-component material in it's at least one compartment (21 a, 21 b).
